# EUROPEAN PATENT APPLICATION

(11) **EP 2 541 748 A1**
(43) Date of publication of application: **02.01.2013**
(21) Application number: 10847438.8
(22) Date of filing: 11.03.2010
(51) Int. Cl.: H02M 7/48

(54) **POWER CONVERTER**

(60) Divisional application: 12188259.1
(71) Applicant: Mitsubishi Electric Corporation, Tokyo 100-8310 (JP)
(72) Inventor: KIMURA, Tomoaki, Tokyo 100-8310 (JP); TAKEUCHI, Kazuhira, Tokyo 100-8310 (JP)
(74) Representative: Pfenning, Meinig & Partner GbR
(86) International application number: PCT/JP2010/054131
(87) International publication number: WO 2011/111208

(57) **Abstract**

The purpose of the present invention is to obtain a power converter that can further improve the maintainability after the power converter is stopped without reducing the power conversion efficiency when the power converter is operating. The power converter includes an inverter 5 that converts input DC power into AC power and outputs the AC power, a capacitor 6 connected between input side terminals of the inverter 5, a discharging unit 7 that is provided to be connectable in parallel with the capacitor 6 and discharges electric charge stored in the capacitor 6, and an opening/closing unit 8 that is connected in series with the discharging unit 7 and opens and closes electrical connection between the capacitor 6 and the discharging unit 7.

## Description

### Field

The present invention relates to a power converter.

### Background

Immediately after a power converter is stopped, electric charge stored in a capacitor connected in parallel with an input unit of an inverter remains in the capacitor. Therefore, for example, when performing maintenance of the power converter, it is needed to wait until the amount of electric charge stored in each capacitor becomes small after the power converter is stopped. Technologies, such as Patent Literature 1 described below, are disclosed as a technology to solve such a problem.

The technology illustrated in Patent Literature 1 discloses a technology in which a discharge resistor is connected in parallel with a capacitor connected in parallel with an input unit of an inverter and the electric charge stored in the capacitor is discharged via the discharge resistor when the inverter is stopped.

### Citation List

### Patent Literature

Patent Literature 1: Japanese Patent Application Laid-open No. 2009-247186

### Summary

### Technical Problem

However, the technology illustrated in Patent Literature 1 has a problem that, because the discharge resistor is connected to the input unit of the inverter all the time, the discharge resistor consumes power not only when the inverter is stopped but also when the inverter is operating, which becomes a factor for reducing the power conversion efficiency.

On the other hand, in the case of a configuration with no discharge resistor, voltage at the input end of the inverter becomes high voltage immediately after the inverter is stopped due to the electric charge stored in the capacitor. Therefore, when performing maintenance of a power converter, an operator needs to discharge the electric charge stored in the capacitor by connecting a discharge resistor to the capacitor. The operation itself of connecting a discharge resistor to the capacitor itself is an operation performed in a high voltage portion, therefore the operation needs to be performed carefully, which results in poor maintainability such as extending the operating time.

The present invention is achieved in view of the above, and has an object to obtain a power converter capable of further improving the maintainability after the power converter is stopped without reducing the power conversion efficiency when the power converter is operating.

### Solution to Problem

In order to solve the aforementioned problems, a power converter according to one aspect of the present invention is constructed in such a manner as to include: an inverter that converts input DC power into AC power and outputs the AC power; a capacitor connected between input side terminals of the inverter; a discharging unit that is provided to be connectable in parallel with the capacitor and discharges electric charge stored in the capacitor; and an opening/closing unit that is connected in series with the discharging unit and opens and closes electrical connection between the capacitor and the discharging unit.

### Advantageous Effects of Invention

According to this invention, an effect is obtained in which the maintainability after the power converter is stopped can be further improved without reducing the power conversion efficiency when the power converter is operating.

### Brief Description of Drawings

FIG. 1 is a diagram illustrating a configuration example of a power converter according to a first embodiment.
FIG. 2 is a diagram illustrating another configuration example of the power converter according to the first embodiment.
FIG. 3 is a diagram illustrating a configuration example of a power converter according to a second embodiment.
FIG. 4 is a diagram illustrating another configuration example of the power converter according to the second embodiment.
FIG. 5 is a diagram illustrating a configuration example of a power converter according to a third embodiment.
FIG. 6 is a diagram illustrating a configuration example of a power converter according to a fourth embodiment.
FIG. 7 is a diagram illustrating a configuration example of a power converter according to a fifth embodiment.
FIG. 8 is a diagram illustrating another configuration example of the power converter according to the fifth embodiment.
FIG. 9 is a diagram illustrating a configuration example of a power converter according to a sixth embodiment.

### Reference Signs List

1 SOLAR CELL MODULE
2, 2a, 2b, 2c, 2d, 2e, 2f, 2g, 2h POWER CONVERTER
3 SYSTEM
4 BUCK-BOOST CONVERTER CIRCUIT
5 INVERTER CIRCUIT
6 CAPACITOR
7 DISCHARGE RESISTOR (DISCHARGE UNIT)
8 SWITCH (OPENING/CLOSING UNIT)
9 SOUND GENERATOR (NOTIFYING UNIT)
9a DISPLAY UNIT (NOTIFYING UNIT)
10 OPERATING UNIT
11 OPENING/CLOSING CONTROL UNIT
12 FILTER CIRCUIT
12a REACTOR
12b CAPACITOR
13 INVERTER-OPERATING-STATE SENSING UNIT
14 OPENING
15 OPENING OPEN/CLOSE SENSING UNIT
17 MONITORING UNIT
18 DISCHARGE ABNORMALITY NOTIFYING UNIT
81 SEMICONDUCTOR SWITCH
82 SWITCH
83 RESISTOR
84 RESISTOR
85 ZENER DIODE

### Description of Embodiments

Exemplary embodiments of a power converter according to the present invention will be explained below in detail based on the drawings. This invention is not limited to these embodiments.

### First Embodiment.

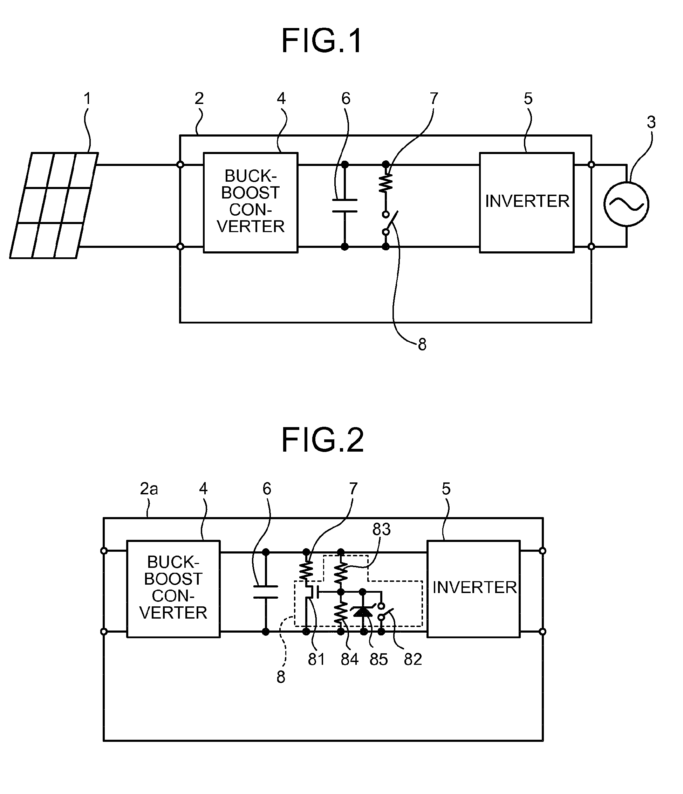

FIG. 1 is a diagram illustrating a configuration example of a power converter according to the first embodiment. The example shown in FIG. 1 illustrates an example of applying the power converter to a power conditioner that converts DC power supplied from a solar cell module 1 into AC power and supplies it to loads (not shown), such as electrical appliances in houses, and a power system (hereinafter, simply referred to as "system") 3.

As shown in FIG. 1, a power converter 2 according to the first embodiment includes a buck-boost converter circuit 4, an inverter circuit 5, a capacitor 6, a discharge resistor (discharging unit) 7, and a switch (opening/closing unit) 8.

The buck-boost converter circuit 4 is connected to the input ends of the power converter 2 at the input ends and outputs DC voltage of the solar cell module 1 supplied through the input ends after boosting or bucking it. The capacitor 6 stores electric charge by the DC voltage boosted or bucked by the buck-boost converter circuit 4. The inverter circuit 5 is connected to the output ends of the power converter 2 at the output ends, and converts DC voltage supplied from the capacitor 6 into AC voltage and outputs it through the output ends of the power converter 2.

The output ends of the power converter 2 are connected to the loads (not shown), such as electrical appliances in houses, and the system 3. The output power of the power converter 2 is consumed in the loads, such as electrical appliances in houses, and surplus power, which cannot be consumed in the loads, such as electrical appliances in houses, reversely flows into the system 3. When the solar cell module 1 cannot generate power because the amount of solar radiation is small, such as in cloudy weather or during the night, the power is supplied to the loads in houses from the system 3.

The discharge resistor 7 and the switch 8 are connected in series to each end of the capacitor 6, respectively. The switch 8 performs a switching operation for determining whether to discharge electric charge stored in the capacitor 6 by the discharge resistor 7.

Next, the operation of the power converter 2 according to the first embodiment will be explained. In the case of operating the power converter 2, the switch 8 is switched to the open state. Therefore, unnecessary power consumption by the discharge resistor 7 can be eliminated when the power converter 2 is operating.

On the other hand, in the case of stopping the power converter 2 for maintaining the power converter 2, the switch 8 is switched to the closed state after the power converter 2 is stopped. Therefore, the electric charge stored in the capacitor 6 is discharged by the discharge resistor 7.

The resistance of the discharge resistor 7 can be made smaller than the case of a configuration in which the discharge resistor is connected all the time. Specifically, in the case of the configuration in which the discharge resistor is connected all the time, the resistance of the discharge resistor needs to be set in consideration of reduction of unnecessary power consumption consumed by the discharge resistor when the power converter is operating and reduction of the discharge time in a maintenance operation after the power converter is stopped, and thus, there is a limit in reducing the resistance. On the other hand, in the power converter 2 according to the first embodiment, it suffices to set the resistance of the discharge resistor 7 in consideration of how the discharge time can be shortened in a maintenance operation after the power converter 2 is stopped. Therefore, in the power converter 2 according to the first embodiment, the electric charge stored in the capacitor 6 can be promptly discharged compared with the case of the configuration in which the discharge resistor is connected all the time.

FIG. 2 is a diagram illustrating another configuration example of the power converter according to the first embodiment. As shown in FIG. 2, in a power converter 2a, the opening/closing unit 8 includes a semiconductor switch 81, a switch 82, a resistor 83, a resistor 84, and a zener diode 85.

In the example shown in FIG. 2, the DC voltage of the capacitor 6 is divided by the resistor 83 and the resistor 84. The switch 82 opens and closes the midpoint at which the voltage is divided. Therefore, the switch 82 can be switched to the closed state at a voltage value even lower than the example shown in FIG. 1 in a maintenance operation, thereby enabling further improvement of the maintainability.

As explained above, the power converter according to the first embodiment includes the opening/closing unit that performs a switching operation for determining whether to discharge the electric charge stored in the capacitor by the discharge resistor, therefore, the opening/closing unit can be switched to the open state when the power converter is operating and the opening/closing unit can be switched to the closed state after the power converter is stopped when the power converter is stopped for performing a maintenance of the power converter, enabling thus further improvement of the maintainability after the power converter is stopped, without reducing the power conversion efficiency when the power converter is operating.

Moreover, because the resistance of the discharge resistor can be made smaller than the case of the configuration in which the capacitor and the discharge resistor are connected all the time, the electric charge stored in the capacitor can be promptly discharged, thereby enabling reduction of the maintenance operation time.

Furthermore, when a maintenance operation of the power converter is not performed after the power converter is stopped, the opening/closing unit is maintained in the open state, so that the electric charge stored in the capacitor is not easily discharged, thereby enabling reduction of the boosting time at the time of starting the next operation.

### Second Embodiment.

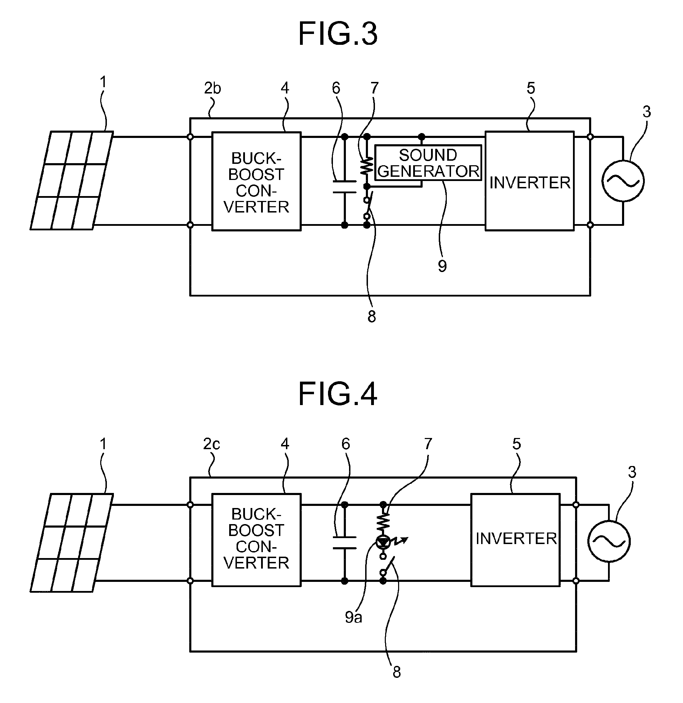

FIG. 3 is a diagram illustrating a configuration example of a power converter according to the second embodiment. The components that are the same as or similar to those in the first embodiment are denoted by the same reference numeral and the detailed explanation thereof is omitted.

As shown in FIG. 3, in a power converter 2b according to the second embodiment, in addition to the configuration shown in the first embodiment, a notifying unit 9, which gives notice of a discharge state of electric charge stored in the capacitor 6 and an open/closed state of the switch (opening/closing unit) 8, is connected in parallel with the discharge resistor (discharging unit) 7. In the example shown in FIG. 3, as the notifying unit 9, a sound generator (for example, buzzer or the like) is used that gives notice of the above-described discharge state and the above-described open/closed state by generating sound.

Next, the operation of the power converter 2b according to the second embodiment will be explained. When an operator switches the switch 8 to the closed state after the power converter is stopped for maintenance of the power converter 2b, if charge remains in the capacitor 6, the sound generator (notifying unit) 9 is energized via the switch 8 and a buzzer sound is generated from the notifying unit 9, thereby to notify the operator that the switch 8 is in the closed state and also electric charge remains in the capacitor 6. Consequently, the operator can recognize that electric charge in the capacitor 6 has been discharged when the buzzer sound stops and start a maintenance operation safely.

Moreover, when an operator switches the switch 8 to the closed state after the power converter is stopped for maintenance of the power converter 2b and performs a maintenance operation, if the operator forgets to switch the switch 8 to the open state and starts operating the power converter 2b after the maintenance operation is completed, the capacitor is recharged, however, the switch 8 is in the closed state, so that electric current flows in the sound generator 9 and the buzzer sound is generated simultaneously. Therefore, the operator can recognize that the power converter 2b is operated while maintaining the switch 8 in the closed state by the generation of the buzzer sound. In the example shown in FIG. 3, the configuration in the case where the sound generator 9 and the discharge resistor 7 are connected in parallel is illustrated, however, the present embodiment can be realized also by the configuration in the case where the sound generator 9 and the discharge resistor 7 are connected in series.

FIG. 4 is a diagram illustrating another configuration example of the power converter according to the second embodiment. In the example shown in FIG. 4, a power converter 2c uses a display unit (for example, LED or the like) 9a connected in series with the discharge resistor 7 and the switch 8 as the notifying unit. With this configuration, it is possible to notify that the switch 8 is in the closed state and electric charge remains in the capacitor 6 by a light emission of the display unit 9a. In the example shown in FIG. 4, the configuration in the case where the display unit 9a and the discharge resistor 7 are connected in series is illustrated, however, the present embodiment can be realized also by the configuration in the case where the display unit 9a and the discharge resistor 7 are connected in parallel.

Moreover, it is possible to provide a voltage detecting unit (not shown) that detects voltage across the capacitor 6 and notify whether discharge of electric charge in the capacitor 6 has been completed based on the voltage across the capacitor 6. Moreover, the voltage of the capacitor 6 may be indicated by using a voltage indicator (not shown) as the notifying unit.

Furthermore, when a display unit (not shown) that displays an operating state and the amount of power generation in the power converter 2c is provided, the open/closed state of the switch 8 can be indicated by letters or symbols by using the display unit.

As described above, according to the power converter in the second embodiment, when the power converter is stopped and the opening/closing unit is switched to the closed state, it is notified that the opening/closing unit is in the closed state and electric charge remains in the capacitor, therefore, when a maintenance operation of the power converter is performed, it is possible to check whether electric charge remains in the capacitor, enabling further improvement of the maintainability after the power converter is stopped.

Moreover, it is notified that the power converter is operated in the state where the opening/closing unit is in the open state, therefore the power conversion efficiency can be prevented from decreasing when the power converter is operating due to an erroneous operation of the switch.

### Third Embodiment.

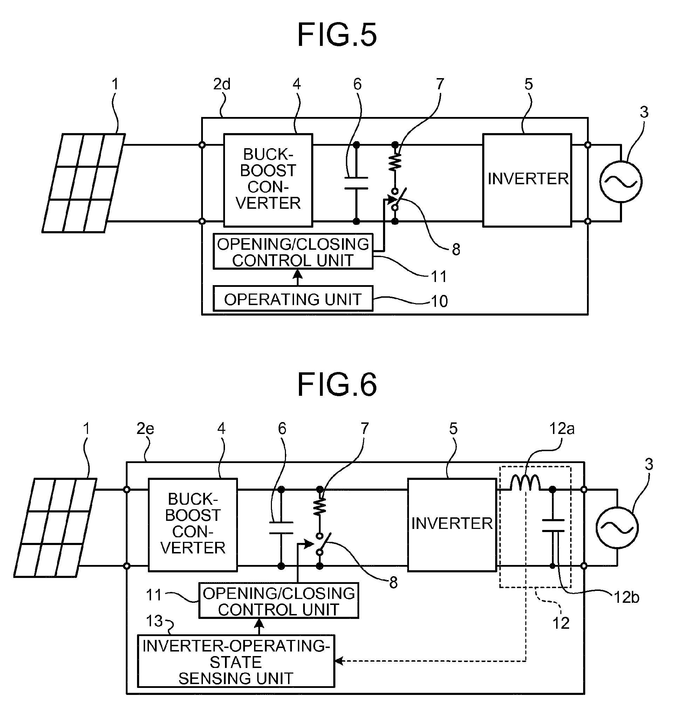

FIG. 5 is a diagram illustrating a configuration example of a power converter according to the third embodiment. The components that are the same as or similar to those in the first embodiment are denoted by the same reference numeral and the detailed explanation thereof is omitted.

As shown in FIG. 5, a power converter 2d according to the third embodiment includes an operating unit 10 and an opening/closing control unit 11 in addition to the configuration shown in the first embodiment.

Next, the operation of the power converter 2d according to the third embodiment will be explained. The operating unit 10 is, for example, a power button for instructing to operate and stop the inverter circuit 5 and the power converter 2d operates and stops the inverter circuit 5 according to the instruction from the operating unit 10.

The opening/closing control unit 11 controls the opening/closing unit 8 into the open state upon reception of an inverter operating instruction from the operating unit 10 and controls the opening/closing unit 8 into the closed state upon reception of an inverter stop instruction from the operating unit 10. In other words, the discharge unit 7 becomes invalid in conjunction with the turning-on of the power button and becomes valid in conjunction with the turning-off of the power button. The opening/closing unit 8 according to the third embodiment can be realized, specifically, using a relay, a semiconductor switch, or the like.

With such control, when the inverter circuit 5 starts operating, the opening/closing unit 8 is automatically controlled into the open state and therefore the discharge resistor 7 becomes invalid, so that unnecessary power consumption by the discharge resistor 7 does not occur. Moreover, when the inverter circuit 5 is stopped, the opening/closing unit 8 is automatically controlled into the closed state and therefore the discharge resistor 7 becomes valid, so that electric charge stored in the capacitor 6 is discharged.

As described above, according to the power converter in the third embodiment, the opening/closing unit is automatically controlled into the open state in conjunction with the turning-on of the power button and the discharge resistor becomes invalid, so that a decrease in the power conversion efficiency when the power converter is operating can be surely prevented.

Moreover, the opening/closing unit is automatically controlled into the closed state in conjunction with the turning-off of the power button and the discharge resistor becomes valid, so that electric charge stored in the capacitor can be surely discharged when performing a maintenance operation, thereby enabling further improvement of the maintainability after the power converter is stopped.

Furthermore, discharge of the electric charge stored in the capacitor is started at the time when the inverter circuit stops operating, therefore the time before starting a maintenance operation can be shortened.

In the third embodiment, the configuration in which the operating unit and the opening/closing control unit are combined with the configuration in the first embodiment is explained, however, the third embodiment can be realized also by combining the operating unit and the opening/closing control unit with the configuration including the notifying unit explained in the second embodiment.

### Fourth Embodiment.

FIG. 6 is a diagram illustrating a configuration example of a power converter according to the fourth embodiment. The components that are the same as or similar to those in the third embodiment are denoted by the same reference numeral and the detailed explanation thereof is omitted.

As shown in FIG. 6, a power converter 2e according to the fourth embodiment includes a filter circuit 12 and an inverter-operating-state sensing unit 13 instead of the operating unit 10 shown in the third embodiment.

The filter circuit 12 includes a reactor 12a and a capacitor 12b and is connected to the output ends of the inverter circuit 5. This filter circuit 12 removes a harmonic component superimposed on AC current output from the inverter circuit 5 and shapes the output current waveform into a sine wave.

Next, the operation of the power converter 2e according to the fourth embodiment will be explained. When removing a harmonic component superimposed on AC current output from the inverter circuit 5, the reactor 12a, which is a component of the filter circuit 12, vibrates due to the harmonic component and generates vibration sound (hereinafter, referred to as "sound wave") in a highfrequency band.

The inverter-operating-state sensing unit 13 detects presence or absence of the sound wave generated from the reactor 12a and sends the detection result to the opening/closing control unit 11.

If the sound wave is detected by the inverter-operating-state sensing unit 13, the opening/closing control unit 11 determines that the inverter circuit 5 is operating and harmonic current is flowing in the reactor 12a and controls the opening/closing unit 8 into the open state. Therefore, unnecessary power consumption due to the discharge resistor 7 does not occur when the inverter circuit 5 is operating.

Moreover, if the sound wave is not detected by the inverter-operating-state sensing unit 13, the opening/closing control unit 11 determines that the inverter circuit 5 is stopped and harmonic current is not flowing in the reactor 12a and controls the opening/closing unit 8 into the closed state. Therefore, electric charge in the capacitor 6 is discharged when the inverter circuit 5 is stopped.

As another configuration example of the power converter 2e according to the fourth embodiment, the inverter-operating-state sensing unit 13 can be configured to detect a gate signal of the inverter circuit 5 and determine the operating state of the inverter circuit 5.

As described above, according to the power converter in the fourth embodiment, in the case where the inverter circuit is operating as a result of determining the operating state of the inverter circuit, the opening/closing unit is controlled into the open state, therefore a decrease in the power conversion efficiency when the power converter is operating can be surely prevented in the similar manner to the third embodiment.

Moreover, the opening/closing unit is controlled into the closed state when the inverter circuit is stopped, so that, in the similar manner to the third embodiment, electric charge stored in the capacitor can be surely discharged when performing a maintenance operation, thereby enabling further improvement of the maintainability after the power converter is stopped.

Furthermore, discharge of the electric charge stored in the capacitor is started at the time when the inverter circuit is stopped, therefore the time before starting a maintenance operation can be shortened in the similar manner to the third embodiment.

In the fourth embodiment, the configuration in which the filter circuit and the inverter-operating-state sensing unit are combined with the configuration in the third embodiment is explained, however, in the similar manner to the third embodiment, the fourth embodiment can be realized also by combining the filter circuit and the inverter-operating-state sensing unit with the configuration including the notifying unit explained in the second embodiment.

### Fifth Embodiment.

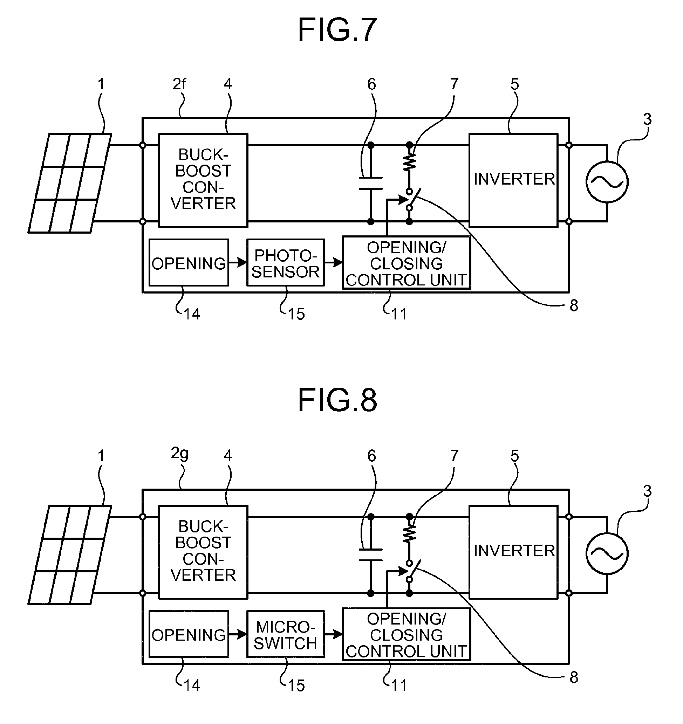

FIG. 7 is a diagram illustrating a configuration example of a power converter according to the fifth embodiment. The components that are the same as or similar to those in the third embodiment are denoted by the same reference numeral and the detailed explanation thereof is omitted.

As shown in FIG. 7, a power converter 2f according to the fifth embodiment includes an openable opening 14 for maintenance provided in a housing of the power converter 2f and an opening open/close sensing unit 15 instead of the operating unit 10 illustrated in the third embodiment.

The opening 14 may be any opening as long as it is an opening that is open when a maintenance operation of the power converter 2f is performed, and for example, the opening 14 may be a front panel of the housing of the power converter 2f.

The opening open/close sensing unit 15 may be any unit as long as it can sense the open state of the opening 14. In the example shown in FIG. 7, as the opening open/close sensing unit 15, a photosensor is used that senses incidence of external light into the housing of the power converter 2f when the opening 14 is opened.

Next, the operation of the power converter 2f according to the fifth embodiment will be explained. When an operator opens the opening 14 after the power converter is stopped for maintenance of the power converter 2f, external light enters the housing of the power converter 2f from the opening 14.

When the opening open/close sensing unit 15 provided in the housing senses an incidence of external light into the housing of the power converter 2f, the opening open/close sensing unit 15 outputs a signal indicating that the opening 14 is opened to the opening/closing control unit 11.

When the opening open/close sensing unit 15 senses an incidence of external light into the housing of the power converter 2f, the opening/closing control unit 11 determines that the opening 14 is opened and controls the opening/closing unit 8 into the closed state. Therefore, if the opening 14 is opened when a maintenance operation of the power converter 2f is performed, electric charge stored in the capacitor 6 is discharged.

Moreover, when the opening open/close sensing unit 15 does not sense an incidence of external light into the housing of the power converter 2f, the opening/closing control unit 11 determines that the opening 14 is not opened and controls the opening/closing unit 8 into the open state. Therefore, even when the power converter 2f is stopped, if a maintenance operation of the power converter 2f is not performed, power consumption by the discharge resistor 7 does not occur.

In the present embodiment, a photosensor is used as the opening open/close sensing unit 15, however, the opening open/close sensing unit 15 can be configured by using a solar cell.

Moreover, as the opening open/close sensing unit 15, a microswitch that detects the open state of the opening 14 can be also used. FIG. 8 is a diagram illustrating another configuration example of the power converter according to the fifth embodiment. As shown in FIG. 8, in a power converter 2g, a microswitch that detects the open state of the opening 14 is used as the opening open/close sensing unit 15, therefore control same as the configuration shown in FIG. 7 can be performed.

As described above, according to the power converter in the fifth embodiment, the open state of the opening, which is opened when performing a maintenance operation of the power converter, is sensed and the opening/closing unit is controlled into the open state when the opening is not opened, therefore a decrease in the power conversion efficiency when the power converter is operating can be surely prevented in the similar manner to the third and fourth embodiments.

Moreover, the opening/closing unit is controlled into the closed state when the opening is opened, so that, in the similar manner to the third and fourth embodiments, electric charge stored in the capacitor can be surely discharged when performing a maintenance operation of the power converter, thereby enabling further improvement of the maintainability after the power converter is stopped.

Furthermore, when the opening is not opened after the power converter is stopped and a maintenance operation is not performed, the opening/closing unit is maintained in the open state, therefore electric charge stored in the capacitor is not easily discharged, thereby enabling reduction of the boosting time at for starting the next operation.

In the fifth embodiment, the configuration in which the opening and the opening open/close sensing unit are combined with the configuration of the third embodiment is explained, however, in the similar manner to the third and fourth embodiments, the fifth embodiment can be realized also by combining the filter circuit and the inverter-operating-state sensing unit with the configuration including the notifying unit explained in the second embodiment.

### Sixth Embodiment.

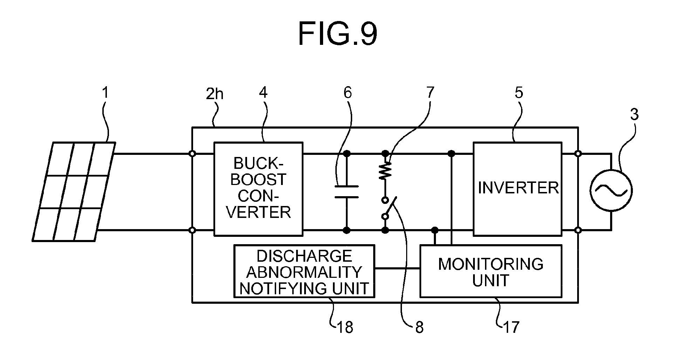

FIG. 9 is a diagram illustrating a configuration example of a power converter according to the sixth embodiment. The components that are the same as or similar to those in the first embodiment are denoted by the same reference numeral and the detailed explanation thereof is omitted.

As shown in FIG. 9, a power converter 2h according to the sixth embodiment includes a monitoring unit 17 and a discharge abnormality notifying unit 18 in addition to the configuration shown in the first embodiment.

The monitoring unit 17 is connected to both ends of the capacitor 6 and senses presence or absence of a failure of the opening/closing unit 8 by monitoring the voltage across the capacitor 6 and, when sensing that the opening/closing unit 8 is defective, outputs a signal indicating that the opening/closing unit 8 is defective to the discharge abnormality notifying unit 18.

When the monitoring unit 17 senses that the opening/closing unit 8 is defective, the discharge abnormality notifying unit 18 notifies that the opening/closing unit 8 is defective. The discharge abnormality notifying unit 18 may be any unit as long as it can notify that the opening/closing unit 8 is defective, and for example, the discharge abnormality notifying unit 18 may be a sound generator (for example, buzzer or the like) that notifies that the opening/closing unit 8 is defective by generating sound or a display unit that displays that the opening/closing unit 8 is defective.

Next, the operation of the power converter 2h according to the sixth embodiment will be explained. When an open fault occurs in the opening/closing unit 8, even if the opening/closing unit 8 is switched to the closed state after the power converter 2h is stopped for performing a maintenance operation of the power converter 2h, rapid discharge of electric charge stored in the capacitor 6 by the discharge resistor 7 does not start. In this case, the monitoring unit 17 senses that the voltage across the capacitor 6 does not become a fixed voltage value or lower even after a certain period of time has elapsed since the opening/closing unit 8 is switched to the closed state after the power converter 2h is stopped and determines that an open fault has occurred in the opening/closing unit 8.

On the other hand, when a short-circuit failure occurs in the opening/closing unit 8, even if the opening/closing unit 8 is switched to the open state for operating the power converter 2h, unnecessary power consumption occurs by the discharge resistor 7. Moreover, the voltage across the capacitor 6 becomes voltage divided by the output impedance of the buck-boost converter circuit 4 and the discharge resistor 7. In this case, the monitoring unit 17 senses that the voltage across the capacitor 6 does not become a fixed voltage value or higher after the power converter 2h starts operating after the opening/closing unit 8 is switched to the open state and determines that a short-circuit failure occurs in the opening/closing unit 8.

As described above, according to the power converter in the sixth embodiment, when the monitoring unit senses that the opening/closing unit is defective, the monitoring unit notifies that the opening/closing unit is defective, therefore repair of the power converter and replacement of the opening/closing unit can be performed promptly.

Moreover, because abnormal voltage of the capacitor after the power converter is stopped and the opening/closing unit is switched to the closed state is sensed, it is possible to sense that an open fault has occurred in the opening/closing unit and avoid execution of a maintenance operation of the power converter in a state where electric charge stored in the capacitor remains at a time of maintenance of the power converter, thereby enabling further improvement of the maintainability after the power converter is stopped.

Furthermore, because abnormal voltage of the capacitor after the opening/closing unit is switched to the open state and the power converter starts operating is sensed, it is possible to sense that a short-circuit failure has occurred in the opening/closing unit, thereby enabling avoidance of generation of unnecessary power consumption when the power converter is operating.

In the sixth embodiment, the configuration of which the monitoring unit and the discharge abnormality notifying unit are combined with the configuration in the first embodiment is explained. However, the present embodiment can be realized also by combining the monitoring unit and the discharge abnormality notifying unit with the configuration including the notifying unit explained in the second embodiment, the configuration including the operating unit and the opening/closing control unit explained in the third embodiment, the configuration including the filter circuit and the inverter-operating-state sensing unit explained in the fourth embodiment, and the configuration including the opening and the opening open/close sensing unit explained in the fifth embodiment.

Moreover, the configurations illustrated in the above embodiments are an example of the configuration of the present invention and it goes without saying that the configuration can be combined with other publicly known technologies and the configuration can be changed, for example, by omitting a part thereof without departing from the gist of the present invention.

### Industrial Applicability

As above, the power converter according to the present invention is useful as an invention capable of further improving the maintainability after the power converter is stopped without reducing the power conversion efficiency when the power converter is operating.

## Claims

1. A power converter comprising:
an inverter that converts input DC power into AC power and outputs the AC power;
a capacitor connected between input side terminals of the inverter;
a discharging unit that is provided to be connectable in parallel with the capacitor and discharges electric charge stored in the capacitor; and
an opening/closing unit that is connected in series with the discharging unit and opens and closes electrical connection between the capacitor and the discharging unit.

2. The power converter according to claim 1, further comprising a notifying unit that gives notice of an open/closed state of the opening/closing unit and a discharge state of electric charge stored in the capacitor.

3. The power converter according to claim 2, wherein the notifying unit is a display unit that indicates that the opening/closing unit is in a closed state and that electric charge remains in the capacitor.

4. The power converter according to claim 2, wherein the notifying unit is a sound generator that notifies that the opening/closing unit is in a closed state and that electric charge remains in the capacitor by generating sound.

5. The power converter according to claim 1, further comprising:
an operating unit that instructs to operate and stop the inverter; and
an opening/closing control unit that controls the opening/closing unit based on an operating instruction and a stop instruction from the operating unit, wherein
the opening/closing control unit controls the opening/closing unit into an open state based on an operating instruction from the operating unit and controls the opening/closing unit into a closed state based on a stop instruction from the operating unit.

6. The power converter according to claim 1, further comprising:
an inverter-operating-state sensing unit that senses an operating state of the inverter; and
an opening/closing control unit that controls the opening/closing unit based on a sensed result from the inverter-operating-state sensing unit, wherein
the opening/closing control unit controls the opening/closing unit into an open state when the inverter is operating and controls the opening/closing unit into a closed state when the inverter is stopped.

7. The power converter according to claim 6, wherein the inverter-operating-state sensing unit senses an operating state of the inverter based on presence or absence of a gate signal of the inverter.

8. The power converter according to claim 6, further comprising a filter circuit that includes a reactor and a capacitor and shapes an output waveform of the inverter, wherein
the inverter-operating-state sensing unit detects a sound wave generated by the reactor and senses an operating state of the inverter.

9. The power converter according to claim 1, further comprising:
an opening that is provided in a housing and is openable and closable at the time of maintenance;
an opening open/close sensing unit that senses an open/closed state of the opening; and
an opening/closing control unit that controls the opening/closing unit based on a sensed result from the opening open/close sensing unit, wherein
the opening/closing control unit controls the opening/closing unit into an open state when the opening open/close sensing unit senses a closed state of the opening, and controls the opening/closing unit into a closed state when the opening open/close sensing unit senses an open state of the opening.

10. The power converter according to claim 9, wherein the opening open/close sensing unit is a microswitch that senses an open state of the opening.

11. The power converter according to claim 9, wherein the opening open/close sensing unit is a photosensor that senses external light from outside a housing when the opening is in an open state.

12. The power converter according to claim 1, further comprising:
a voltage detecting unit that detects voltage across the capacitor; and
a notifying unit that notifies whether discharge of electric charge in the capacitor has been completed based on a detection result from the voltage detecting unit.

13. The power converter according to claim 12, wherein the notifying unit is a display unit that indicates whether discharge of electric charge in the capacitor has been completed.

14. The power converter according to claim 12, wherein the notifying unit is a sound generator that notifies whether discharge of electric charge in the capacitor has been completed by generating sound.

15. The power converter according to claim 1, further comprising:
a monitoring unit that senses whether the opening/closing unit is in an abnormal state based on the voltage across the capacitor; and
a discharge abnormality notifying unit that notifies whether the opening/closing unit is in an abnormal state based on a detection result from the monitoring unit.

16. The power converter according to claim 15, wherein the discharge abnormality notifying unit is a display unit that displays whether the opening/closing unit is in an abnormal state.

17. The power converter according to claim 15, wherein the discharge abnormality notifying unit is a sound generator that notifies whether the opening/closing unit is in an abnormal state by generating sound.
